# EUROPEAN PATENT APPLICATION

(11) **EP 2 933 698 A2**
(43) Date of publication of application: **21.10.2015**
(21) Application number: 15162768.4
(22) Date of filing: 08.04.2015
(51) Int. Cl.: G05B 19/409

(54) **Machine state display device of composite lathe having a plurality of main spindles**

(30) Priority: 14.04.2014 JP 2014082926
(71) Applicant: Nakamura-Tome Precision Industry Co., Ltd., Hakusan-shi, Ishikawa (JP)
(72) Inventor: Nakanishi, Nagafumi, Ishikawa, 000-000 (JP)
(74) Representative: Isarpatent

(57) **Abstract**

The invention relates to a device which displays a machine state and a work state of a composite lathe having a plurality of main spindles on a display of a control panel, and provides a display device which can viscerally understand an operating state of a machine and is excellent in design. The invention can obtain the device which can easily teach and instruct the controller setting and command which affect the machine state. The device displays three-dimensional figures of a plurality of main spindles and tool posts on a full-time display region which is provided in a display of a control panel. The figures of the main spindles and the figures of the tool posts are arranged in correspondence to arrangement aspects of the main spindles and the tool posts of an actual machine, and display main spindle selection states of the respective tool posts by arrow figures which are directed from the respective tool posts to the main spindle figures. The arrow figures are displayed so as to show motions toward the main spindle figures indicated by the arrows.

## Description

### BACKGROUND OF THE INVENTION

### Field of the Invention

This invention relates to a device which displays a machine state and a work state of a composite lathe having a plurality of main spindles, for example, a rotating state of a main spindle and a rotary tool shaft, and a main spindle selection state of a tool post on a display of a control panel.

### Description of the Conventional Art

A cover is provided in the machine tool so as to prevent cutting fluid and chips from flying in a factory at the work processing time. A window for viewing an inner portion of the machine is provided in the cover, however, it is hard for an operator to watch a state of an entire machine through the window while operating the control panel. Therefor a display screen displaying the machine state is provided in the display of the control panel.

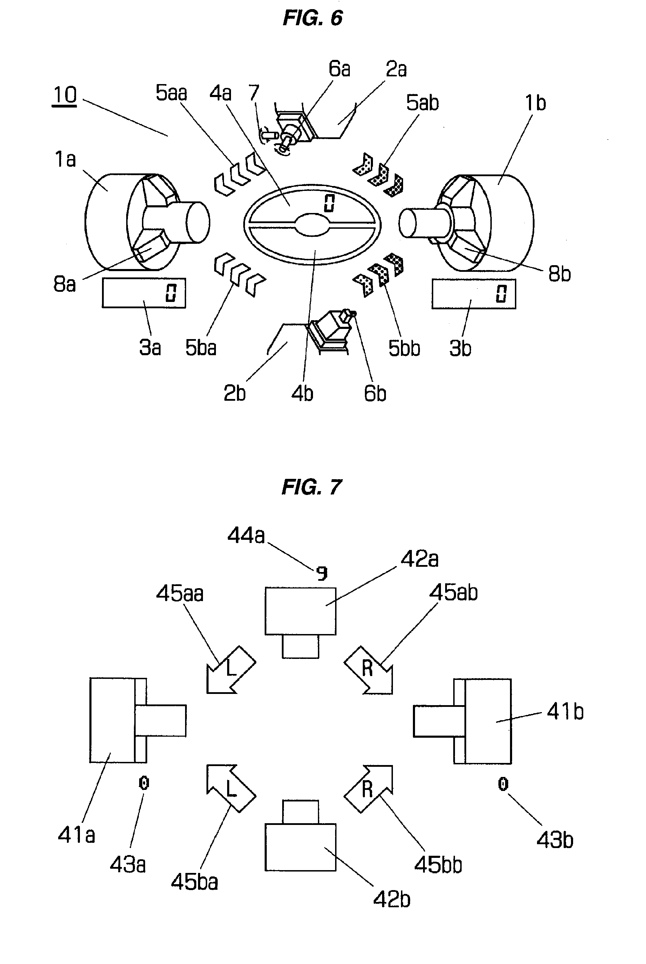

Fig. 7 is a view of an example of a conventional display screen showing a machine state in a two-spindle opposed type lathe having tool posts in upper and lower sides of a main spindle axis. There are displayed two-dimensional figures 41a and 41b, and 42a and 42b which schematically show two main spindles and tool posts to a display screen, and there are displayed numerical values 43a, 43b and 44a which display speed of rotation of the main spindles and speed of rotation of the rotary tool installed to the tool post. Arrow figures 45aa to 45bb directed to the two-dimensional figures of the main spindles from the two-dimensional figures of the tool posts are figures which display the main spindle selection states of the respective tool posts, that is, display the selection state of main spindle the respective tool posts perform the process together.

An NC lathe carries out the process while exchanging a tool by an index of a tool turret or a tool exchanger. In a composite lathe which can carry out a process by a rotary tool such as a drill or a milling cutter, the tool post is necessarily provided with a drive device for the rotary tool. Further, many kinds of tools are necessary for processing complicated shapes.

In the composite lathe having a plurality of main spindles and tool posts, on the assumption that there are provided a tool post which can install a rotary tool and a tool post which is dedicated for lathe turning process, and the tool posts can carry out process of any of the works which are gripped in a plurality of main spindles, it is possible to achieve a composite lathe which can carry out the process using the rotary tool and has an increased number of the usable tools.

The NC machine tool is provided with an automatic operation mode which continuously and automatically carries out a series of processes from a raw material to a finished product according to a processing procedure described in a processing program. The NC machine tool is provided with a step operation mode and a manual operation mode which carries out a plurality of processing steps described in the processing program per step or from a midstream step as the other operation mode.

In the case of rewriting the processing program for improving a productivity or a quality and in the case of carrying out the processing of a new work, a test processing is carried out for checking whether or not the processing program accurately operates and avoiding an abnormal stop caused by interference between the tool and the work and an overload. The step operation mode is used at the test processing time.

The processing program of the lathe having a plurality of tool posts is produced per tool post. For example, in the two-spindle opposed type lathe described in Fig. 7, while the tool post in an upper side of the drawing carries out the processing of the left work by the rotary tool, the lower tool post carries out the lathe turning process of the right work, and starts the next step after the end of the step carried out by the other tool post at a necessary situation. The processing program is produced by proportionally distributing how the tool post carries out the step so that a waiting time of each of the tool posts is minimized.

In the case that the machine stops in the middle of the work processing at the automatic operation time or the step operation time, the machine is structured such as to store the step executed at the time, and restart the processing operation from the beginning of the step when the machine is restarted. In the case that the machine stop in the middle of the processing is caused by a defect of a raw material size and an erroneous cutting due to a programming glitch, it is necessary to replace the work under processing by a new raw material and restart the machine.

In the lathe having a plurality of main spindles, the lathe processes the works in respective sides by a plurality of main spindles, and the machine stops normally by one work processing defect. At this time, in the case that the work in which problem occurs is replaced by the new raw material and the machine is restarted, it is necessary to apply the processing to the new raw material from the beginning. On the other hand, it is only necessary to apply the processing from the beginning of the step when the machine stops to the other works. Since the controller can not recognize a work which the work in the main spindle is replaced by, it is necessary to teach the controller a state of the replaced work when the work is replaced in the middle of the processing.

Further, in the case of registering a retracted position of each of the tool posts at the loading and unloading time of the work or the work transferring time between the main spindles in the controller, and in the case of registering a tool offset value of the tool in each of the tool posts in the controller, the registration is carried out by impressing the position of the tool post at the registering time on the controller. In the lathe having a plurality of main spindles, it is necessary to teach the controller the main spindle on which the registered value is registered, at the registering time.

Conventionally, the teaching applied to the controller has been carried out by inputting command from the control panel or selecting command displayed on the display, however, there has been a problem that it is troublesome to operate.

### SUMMARY OF THE INVENTION

### Problem to be Solved by the Invention

As mentioned above, it has been conventionally carried out to display the machine state on the display of the control panel. However, since the conventional display is a monochrome display which uses characters and two-dimensional figures, not only the conventional display is inferior in a design characteristic, but also the conventional display is hard to be understood viscerally due to poor visual change. As a result, there has been a problem that the change of the display when the machine state changes tends to be missed.

Further, since the machine state is displayed by simplified figures and symbols, it is hard to understand the meaning of the display until the meanings of the simplified figures and symbols are learnt, and there has been a problem that an unskilled operator tends to erroneously operate.

Further, it is troublesome to teach the controller in the case that the machine stops in the middle of the processing and operator replaces the work, and in the case that the operator sets a tool offset value, and high level of skill is required for the works. Further, there has been a problem that an erroneous operation tends to be generated.

A first object of the invention is to provide a machine state display device which can viscerally understand an operating state of a machine, whereby it is possible to easily and securely impress a change of the machine state on an operator, and is excellent in design.

A second object of the invention is to provide a machine state display device which can teach a main spindle selection state of a tool post and a work state at the restarting time through one-touch operation, aiming at providing a display screen of the machine state which can easily teach the controller setting and command which affect the machine state.

### Means for Solving the Problem

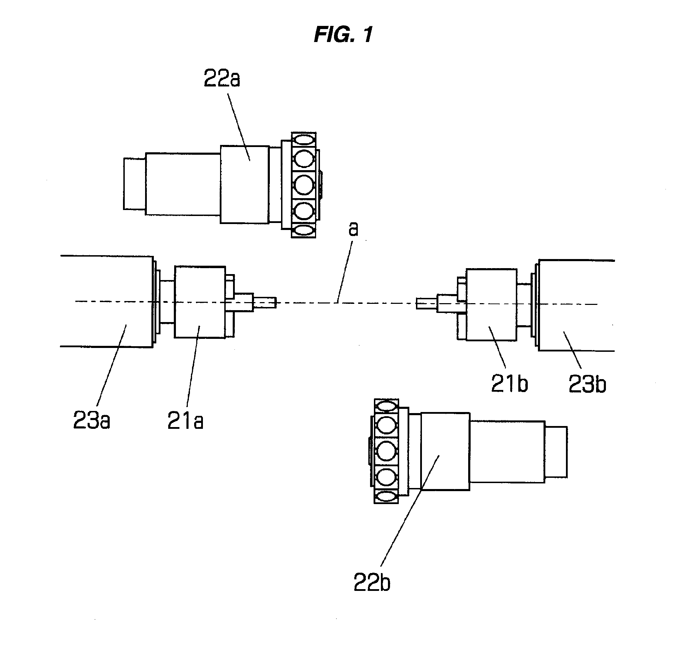

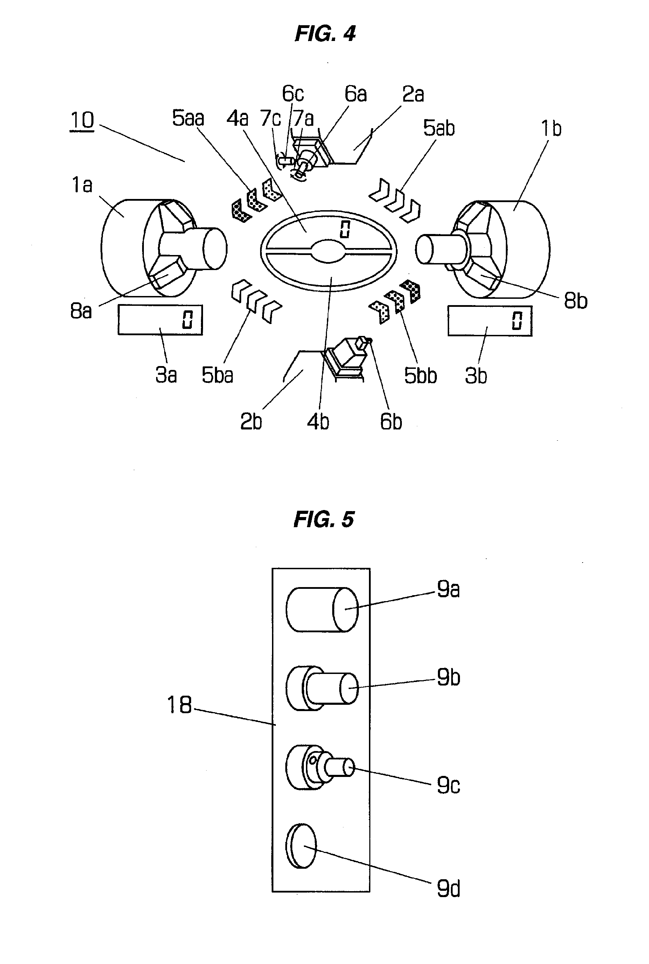

A machine state display device according to the invention displays three-dimensional figures of a plurality of main spindles 21 (21a, 21b) and a plurality of tool posts 22 (22a, 22b), that is, figures seen from a diagonal direction, on a full-time display region 12 which is provided in a display 11 of a control panel 14. The full-time display region 12 is a region which is always displayed during an automatic operation and a manual operation of the machine. The three-dimensional figures of the main spindles (hereinafter, refer to as "main spindle figures") 1 (1a, 1b) and the three-dimensional figures of the tool posts (hereinafter, refer to as "tool post figures") 2 (2a, 2b) are arranged in correspondence to arrangement aspects of the main spindles 21 and the tool posts 22 of an actual machine, and display main spindle selection states of the respective tool posts 22 by arrow figures 5 (5aa, 5ab, 5ba, 5bb) which are directed from the respective tool posts 2a and 2b to the main spindle figures 1a and 1b. The arrow figures 5 are displayed so as to show motions toward the respective main spindle figures indicated by the arrows, for example, in such a manner that dark and light parts of the arrow figures filled in dark and light move toward the selected main spindles.

Further, in the case that rotation information of the main spindle 21 is acquired from an NC device, and the main spindle rotates, the display device displays the main spindle figure 1 corresponding to the main spindle as a motion picture rotating at a low speed, in correspondence to the rotation direction of the main spindle 21 of the actual machine.

Preferably, in the case that process command to each of the tool posts 22 is acquired from the NC device, and the process command is a lathe turning process command, a three-dimensional figure of a turning tool (hereinafter, refer to as "turning tool figure") 6b is displayed as a three-dimensional figure of a tool (hereinafter, refer to as "tool figure") 6 which is displayed on the corresponding tool post, and in the case that the processing command is a milling process command, a three-dimensional figure of a drill (hereinafter, refer to as "drill figure") 6a is displayed. Further, in the case that the drill figure 6a is displayed, an arrow 7a in a direction corresponding to the rotation direction of the tool in the actual machine is displayed near the tool figure 6a.

In the case that a panel of the display 11 of the control panel is a touch panel, the following means can be employed. More specifically, there is provided a screen on which three-dimensional figures of a plurality of work states (hereinafter, refer to as "work figures") 9 (9a to 9d) are arranged, the screen being a work state selection screen 18 which creates command teaching a work state corresponding to the touched work figure to the controller. Further, when the main spindle figures 1a and 1b are touched, the screen 18 is displayed in a main region 13 of the display. As a result, it is possible to easily carry out an operation of teaching the controller what work is replaced, in the case that the operator replaces the work in any main spindle, so that it is possible to lighten a risk of an erroneous operation.

Further, in the case that the arrow figures 5aa to 5bb directed from the tool post figures to the main spindle figures are set to a start button of a command for switching the main spindle, it is possible to carry out an operation for manually switching the main spindle selection state of the tool post through one-touch operation. At this time, since the main spindle selection state of the tool post can be confirmed by switching the display state of the arrow figure 5, it is possible to simplify the work of the operator when the operator sets the retracted position of the tool post and when the operator sets the tool offset value, and it is possible to prevent the erroneous operation as much as possible.

### Effect of the Invention

Since the main spindle 21 and the tool post 22 are displayed as the three-dimensional figure 1 of the arrangement corresponding to the arrangement state of the actual machine, and the rotating state and the main spindle selection state are displayed as the motion picture, the main spindle 21 and the tool post 22 being the main machine elements of the lathe having a plurality of main spindles, the operator can viscerally comprehend the machine state, and it is possible to reduce the risk that the operator erroneously recognizes the machine state.

Further, the operator can viscerally recognize whether the process at the current time point of the tool post is the lathe turning process or the milling process, by displaying the tool figure 6 of the tool post figure by the turning tool figure 6b and the drill figure 6a, and the operator can easily confirm both the tool motion and the main spindle motion by displaying together with the motion picture display of the main spindle rotation.

Further, since the teaching of the work state to the controller and the changing of the main spindle selection state of the tool post when the work is replaced can be taught or instructed to the NC device by touching the display elements (the numerals, characters and figures displayed on the display) which indicate the machine state, in place of the command input and the selecting operation, an operability is improved and a working efficiency is widely improved, and there is an effect that the erroneous operation can be prevented.

### BRIEF EXPLANATION OF THE DRAWINGS

Fig. 1 is a schematic view showing an example of a machine tool to which the invention is applied;
Fig. 2 is a view showing a display screen of the machine tool in Fig. 1;
Fig. 3 is a block diagram showing a control system of the machine tool in Fig. 1;
Fig. 4 is a view showing details of a machine state display element;
Fig. 5 is a view showing an example of a work state selection screen;
Fig. 6 is a view showing switching of a main spindle selection state of a tool post from the state shown in Fig. 4; and
Fig. 7 is a view showing an example of a conventional machine state display element.

### DETAILED DESCRIPTION OF PREFERRED EMBODIMENT

Next, a description will be given of an embodiment according to the invention by exemplifying a two-spindle opposed type composite lathe having two turret tool posts. The lathe according to the embodiment shown in Fig. 1 is provided with left and right main spindle stocks 23a and 23b which are opposed on a main spindle axis a, and main spindles 21a and 21b which are axially supported to the main spindle stocks, and is provided with turret tool posts 22a and 22b in a far upper side and a near lower side as seen from an operator in relation to the main spindle axis a. One (the right main spindle stock) 23b of the main spindle stocks can move forward toward and backward from the other (the left main spindle stock) 23a, and moves close to and away from the left main spindle at the transferring time of a work between both the main spindles.

The upper tool post 22a can move and be positioned in an X-axis direction which is a cutting direction of the tool, a Z-axis direction which is parallel to the main spindle axis, and a Y-axis direction which is a direction perpendicular to the paper surface of the drawing, a rotary tool such as a drill and a milling cutter can be installed to the upper tool post 22a, and a tool drive motor (not shown) driving the rotary tool is mounted to the upper tool post 22a. On the other hand, the lower tool post 22b is not provided with any tool drive motor, is a tool post which carries out only a lathe turning process, and can move and be positioned in the X-axis direction and the Z-axis direction.

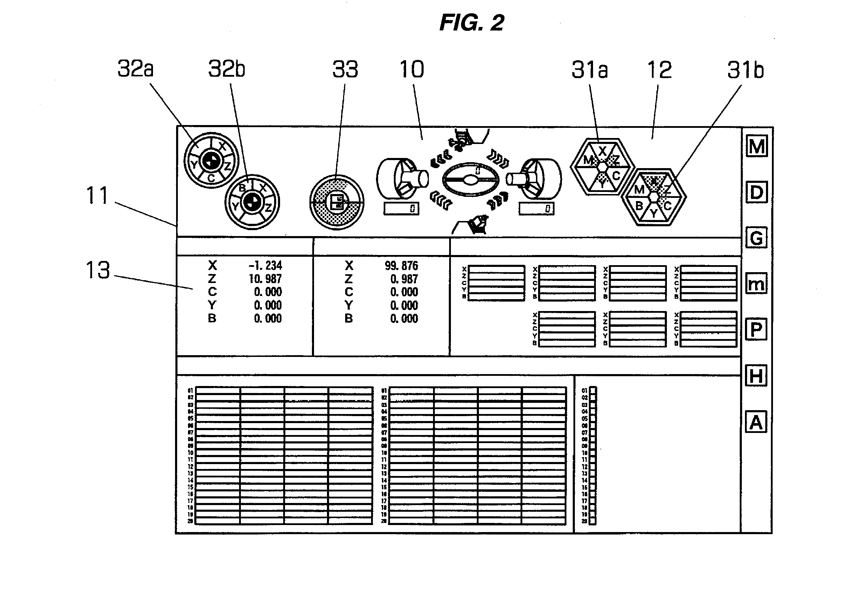

Fig. 2 is a view showing a display screen which is provided in a control panel of the machine tool. A display 11 is comparted into a full-time display region 12 in which a machine state display element 10 is arranged, and a main region 13 which displays various screens in a switching manner. During the drive of the machine, the display element of the full-time display region 12 is always displayed without being switched even in the case that the screen of the main region 13 is switched.

The full-time display region 12 is provided with the machine state display element 10, motor load display elements 31 (31a, 31b) which display load of motors relating to the process such as a feed motor of the tool post, a main spindle motor and a tool motor, retracted state display elements 32 (32a, 32b) which display retraction positions of the respective tool posts, and an override value display element 33. The motor load display element 31 and the retracted state display element 32 are provided respectively as one display element per tool post.

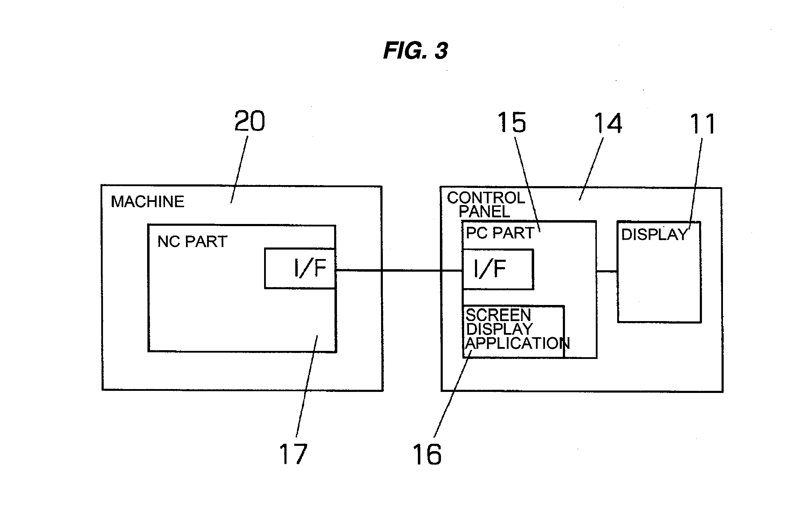

Fig. 3 is a block diagram of a hardware which executes the invention. The NC device controlling the machine tool 20 is provided with an NC part 17 and a PC part 15, and data is given and received via an interface I/F. The specification of the processing program and the machine are set in the NC part. In the drawing, the NC part is drawn in the machine side and the PC part is drawn in the control panel, however, the NC part and the PC part can be provided integrally.

The PC part 15 is provided with a screen display means (software) 16, and the machine state display element 10, the motor load display element 31, the retracted state display element 32 and the override value display element 33 are displayed on the display 11 according to a machine state display program and a motor load display program which are registered in the screen display means 16.

The machine state display element 10 is in detail shown in Fig. 4. Left and right main spindle figures 1a and 1b and upper and lower tool post figures 2a and 2b are arranged in the machine state display element 10 according to the same arrangement relationship as the arrangement state of the actual machine, and numerical value display regions 3a and 3b displaying speed of rotation of the main spindle are provided below the left and right main spindle figures 1a and 1b. Further, numerical character display regions 4a and 4b are provided between the upper and lower tool post figures 2a and 2b, the numerical character display regions 4a and 4b showing the speed of rotation of the tool in the upper and lower tool posts while separating an oval into upper and lower sections. In the embodiment, since the lower tool post 22b is not provided with the tool drive motor, the corresponding numerical character display region 4b is blank.

Arrow figures 5aa to 5bb directed to the left and right main spindle figures 1a and 1b from the upper and lower tool post figures 2a and 2b show selected main spindles of the respective tool posts which are selected at the display time point, and are displayed as motion pictures in such a manner that the arrow figures directed toward to the selected main spindles move toward the arrow directions. In the example of the drawing, filled colors of V-shaped figures arranged from the tool post side toward the main spindle side are displayed in such a manner as to be moved sequentially from the tool post side toward the main spindle side.

As the tool figures 6, the drill figure 6a is displayed as a rotary tool in the upper tool post figure, and the turning tool figure 6b is displayed as a lathe turning tool in the lower tool post figure. The arrow 7a indicating the rotation direction is displayed near the drill figure 6a of the upper tool post. In the drawing of the embodiment, two drill figures 6a and 6c in the case that the rotary tool is installed via a straight holder and is installed via an angle holder are simultaneously displayed, and the arrows 7a and 7c indicating the rotation directions of the respective tools are displayed.

In the case that the main spindle rotates on the basis of the command of the NC device, the machine state display program acquires the rotation command from the NC part, moves chuck claws 8a and 8b of the main spindle figures on the ovals having the axes of the respective main spindle figures as their center axes according to the commanded rotation directions, and displays the main spindle rotations as the motion pictures. The rotation direction of the main spindle is displayed by moving the chuck claws 8a and 8b displayed in the near side of the drawing upward or downward.

The state shown in Fig. 4 indicates a state in which the work gripped by the left main spindle is processed by the rotary tool of the upper tool post and the work gripped by the right main spindle is processed by the lathe turning tool of the lower tool post. In the case that a new step is a processing step of the work in the opposite side when the step goes to the next step according to the progress of the process, the display state of the arrow figure 5 is switched in such a manner that the arrow figure 5 is seen to move toward the new work side (refer to Fig. 6).

Further, in the case that the tool in the upper tool post is replaced by the lathe turning tool from the rotary tool, the tool figure is converted into the turning tool figure from the drill figure, and the arrows 7 (7a, 7b) indicating the rotation direction disappear.

The display panel in the drawing is a touch panel, and the main spindle figures 1a and 1b are icons which call a work state selection screen 18 shown in Fig. 5. More specifically, the program displaying the work state selection screen 18 is started by touching the main spindle figures 1a and 1b, and the drawing is displayed on the main region 13 of the display.

A raw material 9a, a process midstream product 9b, a finished product 9c and a fragment 9d are schematically displayed as three-dimensional figures on the work state selection screen 18, and it is commanded to the NC device which of the raw material, the process midstream product, the finished product and the fragment the work gripped to the main spindle in the corresponding side, by touching the figures 9a to 9d. The NC device determines a process starting step and a skipping step when the machine is next started, on the basis of the command, and carries out the processing motion.

For example, in the case that the machine stops in the midstream of the processing step, and the process midstream product in the left main spindle side is replaced by the raw material, the work state selection screen 18 is called by touching the left main spindle figure 1a, and the machine is restarted by touching the raw material figure 9a. Only the process applied to the left work is carried out step by step from the beginning while skipping the processing step applied to the right work until the machine reaches the initial state of the stop step (which is recorded by the NC device), and the processes applied to the right and left works are carried out according to the procedure which is described in the processing program after reaching the starting point of the stop step.

The arrow figures 5aa to 5bb directed to the main spindle figures 1a and 1b from the upper and lower post figures 2a and 2b are the icons which create and execute the command switching the selected main spindle of the corresponding tool post. More specifically, the display states of the arrow figures 5aa and 5ab are converted by touching the arrow figure 5ab directed to the right main spindle figure 1b from the upper tool post figure 2a in the state in Fig. 4, and the arrow figure 5ab is displayed in such a manner as to move toward the right main spindle figure 1b, as shown in Fig. 6. As a result, it is possible to switch the selected main spindle at the setting time of the retraction position of the tool post and at the tool offset setting time through one-touch operation.

## Claims

1. A machine state display device of a composite lathe having a plurality of main spindles, the machine state display device comprising:
a full-time display region which is provided in a display of a control panel; and
three-dimensional figures of a plurality of main spindles and tool posts which are arranged in said full-time display region in correspondence to an arrangement of said main spindles and the tool posts in an actual machine,
wherein a rotation direction of the main spindle is displayed as a motion picture which rotates the three-dimensional figure corresponding to said main spindle at a low speed in the same direction, and a main spindle selection state of the tool post is displayed by an arrow figure which is directed to the three-dimensional figure of the main spindle selected from the three-dimensional figure of said tool post.

2. The machine state display device according to claim 1, wherein the machine state display device acquires information which of a lathe turning process command and a milling process command a process command applied to the tool post having a tool drive motor from an NC device, displays a three-dimensional figure of a turning tool as a figure displaying the tool in said tool post in the case that the process command is the lathe turning process command and displays a three-dimensional figure of a drill in the case that the process command is the milling process command, and displays an arrow figure indicating a rotation direction of the tool near the displayed drill figure.

3. The machine state display device according to claim 1 or 2, wherein the arrow figure displaying the main spindle selection state of the tool post is an arrow figure which is seen in such a manner as to move toward the main spindle figure which is indicated by the arrow.

4. The machine state display device according to claim 1, 2 or 3, wherein the arrow figure displaying the main spindle selection state of the tool post is a start button of a program which selects the main spindle in a side directed by said arrow, in a machine state display device of a composite lathe having a plurality of main spindles, the machine state display device in which a display panel of a control panel is a touch panel.

5. The machine state display device according to claim 1, 2, 3 or 4, wherein the three-dimensional figure of said main spindle is a start button of a program which displays a screen displaying three-dimensional figures of a plurality of works having different process states, and the three-dimensional figure of said work is a button teaching the NC device the matter that the work in the state indicated by each of the three-dimensional figures is installed to said main spindle.
